# EUROPEAN PATENT APPLICATION

(11) **EP 1 054 569 A1**
(43) Date of publication of application: **22.11.2000**
(21) Application number: 99440117.2
(22) Date of filing: 19.05.1999
(51) Int. Cl.: H04Q 3/00, H04M 7/00, H04L 12/64, H04L 12/66

(54) **Method of establishing a connection across a telephone network and an IP network**

(71) Applicant: ALCATEL, 75008 Paris (FR)
(72) Inventor: Jadoul, Marc, 9120 Beveren (BE)
(74) Representative: Zinsinger, Norbert

(57) **Abstract**

The invention relates to a method of establishing a telephone connection between a first terminal (TE1) and a second terminal (TE3) over an IP network (IPNET), and to a service control point (SCP) and a computer program for the service control point (SCP) for carrying out the method. A call containing a number of the second terminal (TE3) as a destination number is routed from the first terminal (TE1) through a telephone network (TNET1) to a service switching point (SSP1, SSP2) of the telephone network (TNET1). From the service switching point (SSP1, SSP2), the service control point (SCP) is triggered for the call. The service control point (SCP) determines the number of a VOIP gateway (VOIPG1, VOIPG2) of the telephone network for the call. With the number of the determined VOIP gateway (VOIPG1), the service control point (SCP) reroutes the call to this VOIP gateway (VOIPG1), and by exchanging messages with the VOIP gateway (VOIPG1), it initiates the establishment of a VOIP connection through the IP network (IPNET) to the second terminal (TE3).

## Description

This invention relates to a method of establishing a telephone connection between a first terminal and a second terminal as set forth in the preamble of claim 1, to a service control point for a telephone network as set forth in the preamble of claim 10, and to a computer program for a service control point as set forth in the preamble of claim 11.

The invention starts from the establishment of telephone connections over IP networks as is described, for example, in ITU-T Specification H.323, 02/98, pages 1 to 2 and pages 12 to 28.

An H.323 gateway provides an interface between an IP network and a telephone network. The gateway encodes, compresses, and packetizes voice and video signals coming from the telephone network, and subsequently transports them in IP packets to a terminal of the IP network or to another H.323 gateway. This allows a telephone call set up from a conventional telephone terminal of a telephone network to be routed to an IP network.

Such a telephone connection is commonly established as follows. The subscriber dials the number assigned to the H.323 gateway in the telephone network. For the subscriber, this number thus represents the number of a VOIP service provider (VOIP = Voice over IP). Then, the H.323 gateway, by playing a voice announcement, requests the subscriber to enter the number of the terminal to be called. By means of this number, the H.232 gateway then initiates the establishment of a corresponding connection through the IP network.

The object of the invention is to speed up the establishment of a telephone connection that can be partially routed through an IP network.

This object is attained by a method of establishing a telephone connection between a first terminal and a second terminal according to the teaching of claim 1, by a service control point for a telephone network according to the teaching of claim 10, and by a computer program for a service control point according to the teaching of claim 11.

The idea underlying the invention is to control the establishment of such a telephone connection transparently for the calling terminal by means of a service control point of the telephone network. The call contains directly the number of the second terminal as the destination number. The service control point triggered for this call determines the number of a VOIP gateway of the telephone network, reroutes the call to this VOIP gateway based on this number, and initiates the establishment of a VOIP connection through the IP network to the second terminal by exchanging messages with the VOIP gateway.

A principal advantage of the invention is that the establishment of connections is speeded up and becomes more user-friendly.

Another advantage is that the invention can be implemented in existing systems at low cost.

Further advantageous aspects of the invention are defined in the subclaims.

According to one advantageous aspect, the service control point makes a selection from two or more possible VOIP gateways. Selection criteria advantageously are the location of the calling terminal or personal preferences of the calling subscriber.

Furthermore, it is advantageous to couple the selection of the VOIP gateway or the decision on the establishment of a telephone connection through the IP network or exclusively through the telephone network with least-cost-routing functions.

In this manner, call routing is optimized and user friendliness is further increased.

The invention will become more apparent from the following description of several embodiments when taken in conjunction with the accompanying drawings, in which:
- Fig. 1: is a block diagram of a communications system with a service control point in accordance with the invention;
- Fig. 2: is a sequence chart for the establishment of a connection through the communications system of Fig. 1; and
- Fig. 3: is a functional block diagram of the service control point of Fig. 1.

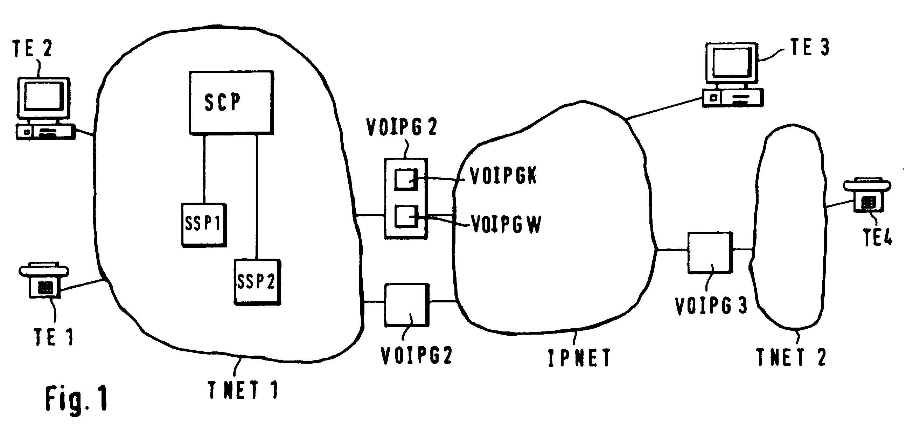

Fig. 1 shows a communications system with three communications networks TNET1, TNET2, and IPNET, four terminals TE1 to TE4, and three VOIP gateways VOIPG1 to VOIPG3. The VOIP gateways VOIPG1 and VOIPG2 interconnect the communications networks TNET1 and IPNET, and the gateway VOIPG3 interconnects the communications networks IPNET and TNET2.

The communications networks TNET1 and TNET2 are conventional telephone networks, such as ISDN networks (ISDN = integrated services digital network). They may also be formed by two or more subnetworks which are assigned to different network operators. Such subnetworks may also be mobile radio networks, for example networks based on the GDM standard (GSM = Global System for Mobile Communications). Terminals can thus be connected to the communications networks TNET1 and TNET2 via an analog PSTN interface, an ISDN interface, or an air interface according to the GSM or DECT standard (DECT = Digital European Cordless Telecommunications), for example. In the embodiment shown, the communications networks TNET1 and TNET2 are interconnected, but they can also be formed by a single, common communications network.

The communications network IPNET is a data network which uses an IP protocol (IP = Internet Protocol) for Layer 3. Examples of such an IP protocol are the IPv4 or IPv6 protocols.

The VOIP gateways VOIPG1 to VOIPG3 are gateways which permit the establishment of a telephone connection through the communications network IPNET. They perform a conversion of the destination number into an IP address, coding/decoding functions, packet assembly/disassembly of the data stream for transport through the communications network IPNET, and further functions, such as echo cancellation. Furthermore, they control the connection setup through the communications network IPNET.

The VOIP gateways VOIPG1 to VOIPG3 are implemented in accordance with ITU-T Recommendation H.323, for example. They may additionally provide the function of a gatekeeper. The VOIP gateway VOIPG1 is formed by a gateway VOIPGW and a gatekeeper VOIPGK, for example. The gatekeeper VOIPGK determines a destination gatekeeper IP address based on the destination digit information received by the gateway VOIPGW. This destination digit information is a number of the called terminal, for example. An IP packet requesting the availability status of the destination gateway is sent to the destination gatekeeper. The destination gatekeeper responds to the request by providing destination gateway availability and IP address information. The origin gatekeeper VOIPGK then transfer this information to the originating gateway VOIPGW.

Terminals TE1 and TE4 are telephone terminals. Terminals TE2 and TE3 are computers which are provided with an interface card for communication over the communications networks TNET1 and IPNET. Terminal TE3 is additionally provided with VOIP software, which enables its user to carry out telephone communication over the communications network IPNET.

The communications network TNET1 comprises one or more exchanges of a specific design which perform the functions of service switching points. Fig. 1 shows two of these service switching points, SSP1 and SSP2. The communications network further comprises a service control point SCP, which communicates with the service switching points SSP1 and SSP2 over the signaling network of the communications network TNET1 using the INAP protocol (INAP = Intelligent Network Application Part). Each of the service switching points SSP1 and SSP2 provides an IN service switching function (IN = Intelligent Network), and the service control point SCP provides an IN service control function. The service control point SCP may also be incorporated in the controller of a service switching point of the communications network TNET1.

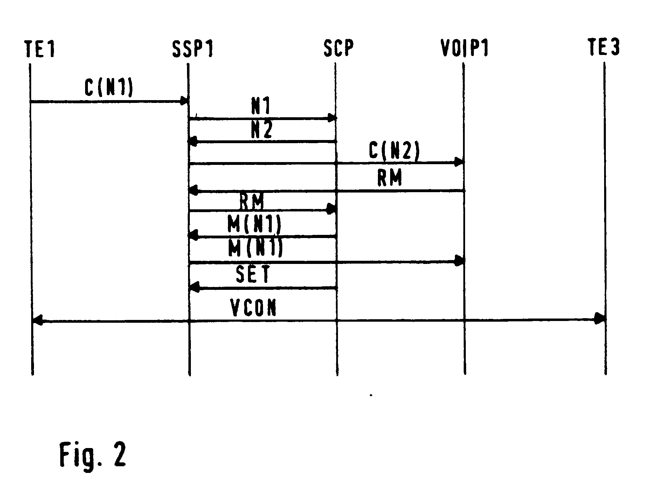

The establishment of a telephone connection from terminal TE1 to terminal TE3 will now be explained with reference to Fig. 2.

Fig. 2 is a sequence chart which illustrates the flow of messages between terminal TE1, service switching point SSP1, service control point SCP, VOIP gateway VOIP1, and terminal TE3.

The subscriber associated with terminal TE1 requests the establishment of a telephone connection to terminal TE3 by dialing a number N1, the number assigned to terminal TE3. Terminal TE3 sends a corresponding connection request to the local exchange of communications network TNET1, whereupon a call C(N1), containing the dialed number N1 as the destination number, is routed through the telephone network TNET1.

The number N1 of terminal TE3 has a VOIP prefix. The call C(N1) is routed to the service switching point SSP1 based on the destination number. The service switching point SSP1 recognizes the VOIP prefix and, in response to this VOIP prefix, triggers the service control point SCP for the call C(N1). To do this, the service switching point SSP1 sends to the service control point SCP a specific service request message which initiates the execution of a specific service logic for the call C(N1) in the service control point SCP. Furthermore, the service switching point SSP1 transmits the destination number of the call C(N1), i.e., the number N1, to the service control point SCP.

The number N1 also can have no VOIP prefix. In that case, the service control point would determine from the destination number of a call whether the telephone connection is to be established through the communications network IPNET, and reroute the call to the VOIP gateway only if that is the case. The service control point SCP would be triggered by the service switching points SSP1 and SSP2 for all incoming calls, for the calls from particular subscribers, i.e., depending on the calling subscriber, or for a group of specific destination numbers, i.e., depending on the called subscriber.

The service control point SCP then determines the number of a VOIP gateway of the communications network TNET1 for the call C(N1), for example a number N2, which is the number of VOIP gateway VOIPG1. Based on the number of the VOIP gateway determined, the service control point SCP then reroutes the call C(N1) to this VOIP gateway and, by exchanging messages with this VOIP gateway, initiates the establishment of a VOIP connection through the communications network IPNET to terminal TE3, to which the number N1 is assigned. To do this, the service control point SCP first establishes a connection to the VOIP gateway VOIPG1 via the service switching point SSP1 by causing the call to be transferred as a call C(N2), containing the number of the VOIP gateway VOIPG1 as a destination number, to the VOIP gateway VOIP1. When this connection has been established, the VOIP gateway VOIPG1 sends a request message RM requesting a destination number for the VOIP connection to be established by it through the communications network IPNET. The service control point SCP responds by sending the number N1 to the VOIP gateway VOIPG1 in a message M(N1). This causes the VOIP gateway VOIPG1 to establish a VOIP connection through the communications network IPNET to terminal TE3. By means of a control message SET, the VOIP gateway VOIPG1 initiates the transfer of the connection to terminal TE1, thus causing a connection to be established between terminal TE1 and VOIP gateway VOIPG1. A telephone connection VCON has thus been established between terminals TE1 and TE3.

A telephone connection can also be established through the communications network IPNET between terminal TE2 and terminal TE4. The procedure is the same as in Fig. 2 except that the number of terminal TE4 is contained in the call and transferred from the service control point to the VOIP gateway VOIPG1. The VOIP gateway VOIPG1 thus establishes a VOIP connection through the communications network IPNET to the VOIP gateway VOIPG3, which then initiates the further establishment of the connection through communications network TNET2 to terminal TE4.

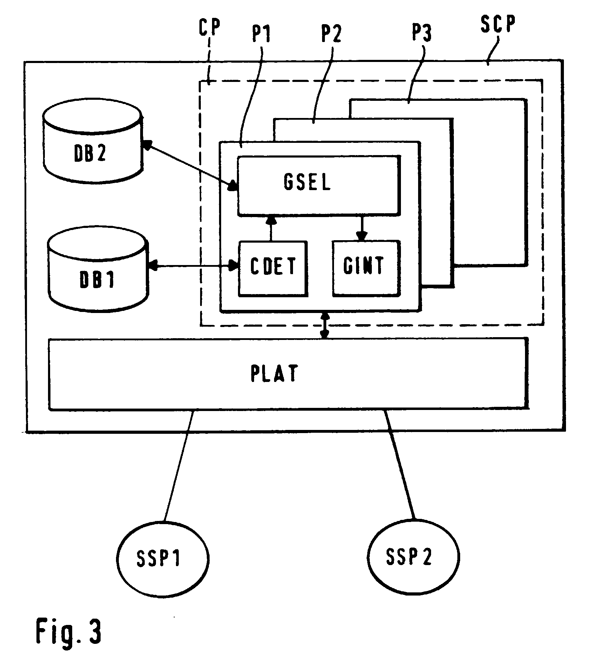

The structure of the service control point SCP will now be described in detail with reference to Fig. 3.

Fig. 3 shows the service control point SCP and the service switching points connected to it, SSP1 and SSP2.

The service control point SCP comprises one or more computers interconnected via a communications medium. Computer programs on the system platform formed by these computers provide the functions of the service control point SCP. From a functional point of view, the service control point comprises an IN platform PLAT, two databases DB1 and DB2, and several service logic processes P1 to P3.

The IN platform PLAT is responsible for the communication between the service logic processes P1 to P3 and the service switching points SSP1 and SSP2 and for the management of these service logic processes. If the service control point SCP is triggered for a call by one of the service switching points SSP1 and SSP2, the IN platform PLAT generates a service logic process which then provides control of the requested IN service for this call. When the service has been provided for the call, the associated service logic process is erased by the IN platform PLAT.

The service logic processes P1 to P3 each represent the execution of a computer program CP. They determine the number of a VOIP gateway of the communications network TNET1 for the respective call they are assigned to. Based on this number, they then reroute the respective call to this VOIP gateway and, by exchanging messages with the VOIP gateway, they initiate the establishment of a VOIP connection through the communications network IPNET.

The detailed functions provided for a call by the service logic process P1 to P2, and thus the structure of the computer program CP, will now be illustrated by the example of the service logic process P1.

The service logic process P1 comprises three functional groups CDET, GSEL, and GINT.

The functional group CDET interacts with the database DB1 to determine from the destination number of the call whether a telephone connection has to be established through the communications network IPNET or not. The database BD1 contains a list of numbers for which a VOIP connection has to be established through the communications network IPNET. The functional group CDET now checks by means of a database access whether the destination number of the call is one of the numbers stored in the database and, if so, reroutes the call to the VOIP gateway; if not, the call will not be handled by the service logic process any longer, and will be routed to the destination terminal like a "normal" call, namely exclusively through the communications network TNET1.

The functional group CDET and the database DB1 can be dispensed with if, for example, the service control point SCP is triggered only for calls whose destination numbers have a VOIP prefix.

Furthermore, each of the numbers stored in the database DB1 may have a VOIP number associated with it. This associated VOIP number would then be determined for the respective call by the functional group CDET and passed to the functional group GINT, which then uses this associated VOIP number instead of the destination number of the call to initiate the establishment of the VOIP connection through the communications network IPNET.

The functional group GSEL interacts with the database DB2 to determine the number of a VOIP gateway of the communications network TNET1 for the call. The database DB2 contains the numbers of the VOIP gateways of the communications network TNET1. Advantageously, the functional group GSEL selects a number from this list of numbers based on one or more predefined criteria. Criteria are, for example: uniform utilization of the capacities of the VOIP gateways, selection of the VOIP gateway nearest the calling terminal, selection according to a user profile of the calling subscriber. In the database DB2, further parameters which relate to these criteria are advantageously associated with the respective number of a VOIP gateway.

The nearest VOIP gateway can be determined simply by comparing the numbers of the VOIP gateways with the calling subscriber's number contained in the call. The user profile of the calling subscriber may be stored in the database DB2 for several or all subscribers. Access to the respective user profile is obtained by means of the calling subscriber's number contained in the call, which thus addresses this subscriber in the database DB2. To access the user profile of a subscriber, the functional group GSEL also may access a database other than the database DB2, for example the subscriber database in the local exchange associated with the respective subscriber.

It is also possible for the functional group GSEL to additionally determine for a call, on the basis of one or more predetermined criteria, whether it is more advantageous to establish a connection via one of the VOIP gateways of the communications network TNET or to establish a "normal" telephone connection exclusively through telephone networks. If the establishment of a "normal" telephone connection is more advantageous, the call will not be rerouted to a VOIP gateway.

The functional group GINT reroutes the call to the VOIP gateway whose number was determined by the functional group GSEL, and, by exchanging messages with this VOIP gateway, initiates the establishment of a VOIP connection through the communications network IPNET to the destination terminal.

It is possible for the functional group GINT to initiate the establishment of a telephone bearer channel between the service switching point SSP1 and the VOIP gateway by means of the determined number, and to transmit the number of the destination subscriber over this bearer channel to the VOIP gateway. For the transmission over the bearer channel, the number of the destination subscriber can be encoded by an MFC method (MFC = multifrequency code).

It is also possible for the functional group GINT to transmit the number of the destination subscriber to the VOIP gateway over a signaling channel of the communications network TNET1. In that case, the messages to be exchanged between the service control point SCP and the VOIP gateway VOIPG1 can also be exchanged direct, i.e., without involving the service switching point SSP1.

It is also possible for the functional group GINT to transmit the number of the destination subscriber directly to the gatekeeper of the VOIP gateway. This transmission is done over a signaling channel of the communications network TNET1. In that case, the messages to be exchanged between the service control point SCP and the gatekeeper VOIPGK of the VOIP gateway VOIPG1 is exchanged direct, i.e., without involving the service switching point SSP1. These messages can also be exchange via a data network (e. g. the Internet) connecting the service control point SCP with the gatekeeper VOIPGK.

Instead of the destination subscriber's number contained in the call, a VOIP number assigned to this number can be transmitted to the VOIP gateway. If the number of the destination subscriber includes a VOIP prefix, this prefix will advantageously be removed from the number and the number so changed will be transmitted to the VOIP gateway.

To reroute the call to the VOIP gateway, the number of the VOIP gateway is entered in the call as a new destination number, and the call so changed is routed to the VOIP gateway. Furthermore, a connection established between the service switching point and the VOIP gateway can be transferred, thus initiating the establishment of a connection between the calling terminal and the VOIP gateway.

## Claims

1. A method of establishing a telephone connection between a first terminal (TE1) and a second terminal (TE3) over an IP network (IPNET),
**characterized in** that a call containing a number of the second terminal (TE3) as a destination number is routed from the first terminal (TE1) over a telephone network (TNET) to a service switching point (SSP1, SSP2) of the telephone network (TNET), that from the service switching point (SSP1, SSP2), a service control point (SCP) is triggered for the call, that the service control point (SCP) determines the number of a VOIP gateway (VOIPG1, VOIPG2) of the telephone network for the call, and that based on the number of the determined VOIP gateway (VOIPG1), the service control point (SCP) reroutes the call to said VOIP gateway (VOIPG1), and initiates the establishment of a VOIP connection through the IP network (IPNET) to the second terminal (TE3) by exchanging messages with the VOIP gateway (VOIPG1).

2. A method as claimed in claim 1, characterized in that the number of the second terminal (TE3) includes a VOIP prefix, and that in response to said VOIP prefix, the service switching point (SSP1, SSP2) triggers the service control point (SCP) for the call.

3. A method as claimed in claim 1, characterized in that the service control point (SCP) is triggered by the service switching point for all calls, and that the service control point (SCP), using a database (DB1), determines from the number of the second terminal (TE3) whether the telephone connection is to be established through the IP network (IPNET), and, if so, reroutes the call to the VOIP gateway (VOIPG1).

4. A method as claimed in claim 1, characterized in that, to initiate the establishment of the VOIP connection through the IP network, the service control point (SCP) sends the number of the second terminal (TE3) to the VOIP gateway (VOIP1).

5. A method as claimed in claim 1, characterized in that, to initiate the establishment of the VOIP connection through the IP network, the service control point assigns a VOIP number to the number of the second terminal using a database, and sends said VOIP number of the second terminal to the VOIP gateway.

6. A method as claimed in claim 1, characterized in that the service control point (SCP) selects for the call one of two or more possible VOIP gateways (VOIP1, VOIP2) based on predefined criteria.

7. A method as claimed in claim 6, characterized in that the service control point selects the nearest VOIP gateway.

8. A method as claimed in claim 6, characterized in that the service control point selects the VOIP gateway based on a user profile of the calling subscriber stored in a database.

9. A method as claimed in claim 1, characterized in that based on one or more predefined criteria, the service control point (SCP) determines whether it is more advantageous to establish for the call a connection through the IP network (IPNET) or exclusively through the telephone network (TNET1, TNET2), and initiates a corresponding transfer of the call.

10. A service control point (SCP) for a telephone network which serves to support the establishment of a telephone connection between a first terminal (TE2) and a second terminal (TE3),
**characterized in** that the service control point (SCP) is designed to determine the number of a VOIP gateway (VOIPG1) of the telephone network for the call when being triggered by a service switching point (SSP1, SSP2) of the telephone network for a call with a number of the second terminal (TE3) as a destination number, and that the service control point (SCP) is further designed to then reroute the call to the determined VOIP gateway (VOIPG1) based on the number of said VOIP gateway (VOIPG1), and to initiate the establishment of a VOIP connection through the IP network (IPNET) to the second terminal (TE3) by exchanging messages with the VOIP gateway (VOIPG1).

11. A computer program for a service control point (SCP) of a telephone network (TNET1), said service control point (SCP) serving to support the establishment of a telephone connection between a first terminal (TE2) and a second terminal (TE3),
**characterized in** that the computer program is designed to control the service control point (SCP) in such a manner that the service control point (SCP), when being triggered by a service switching point (SSP1, SSP2) of the telephone network for a call containing a number of the second terminal (TE3) as a destination number, determines the number of a VOIP gateway (VOIPG1) of the telephone network, and that it then reroutes the call to the determined VOIP gateway (VOIPG1) based on the number of said VOIP gateway (VOIPG1), and initiates the establishment of a VOIP connection through the IP network (IPNET) to the second terminal (TE3) by exchanging messages with the VOIP gateway (VOIPG1).
